# EUROPEAN PATENT APPLICATION

(11) **EP 0 594 234 A1**
(43) Date of publication of application: **27.04.1994**
(21) Application number: 93202723.8
(22) Date of filing: 20.09.1993
(51) Int. Cl.: B60R 21/00

(54) **Current source for inflatable restraint system**

(30) Priority: 19.10.1992 US 963182
(71) Applicant: DELCO ELECTRONICS CORPORATION, Kokomo Indiana 46902 (US)
(72) Inventor: Schultz, Frederich Henry, Santa Barbara, California 93111 (US)
(74) Representative: Denton, Michael John

(57) **Abstract**

A supplemental inflatable restraint system with a controllable current source comprises a sense element (54), a switch device (110) coupled to the sense element (54), and a squib (38) coupled to the switch device (110). The sense element (54), switch device (110) and squib (38) are coupled in a series circuit between a power source and ground. A deploy control circuit (36-52,90) is coupled to the switch device (110) to forward bias the switch device (110) to allow electric current to flow through the sense element (54), switch device (110) and squib (38) for deploying a supplemental inflatable restraint. A current control circuit (84) is coupled to the sense element (54) and switch device (110) and responds to the current flow through the sense element (54) to regulate the switch device (110), effectively limiting current through the series circuit to a predetermined value.

## Description

This invention relates to a controllable current source for an inflatable restraint system.

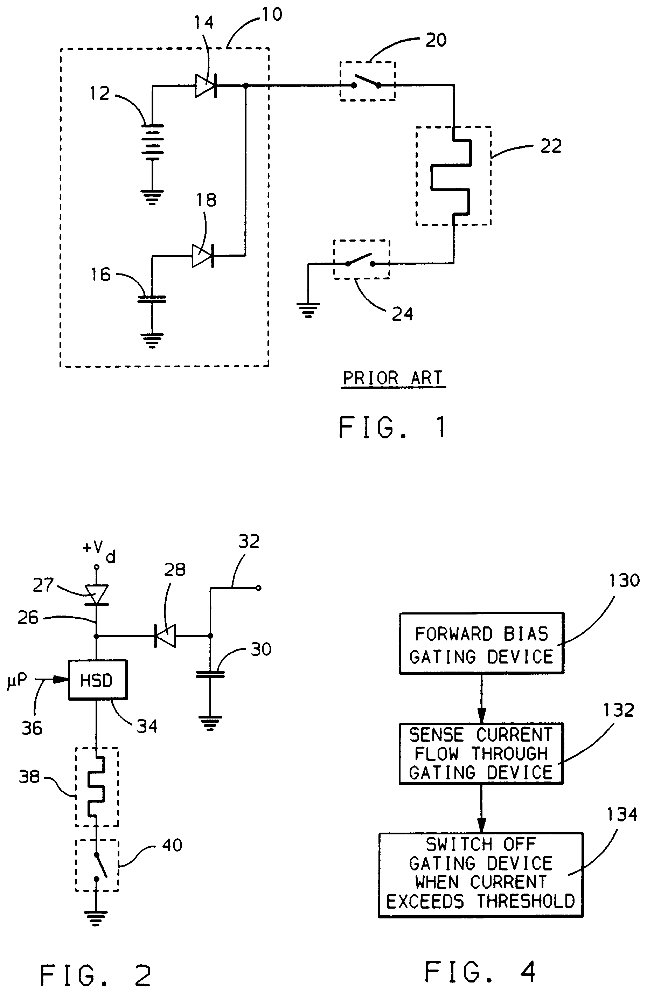

A typical supplemental inflatable restraint activation circuit is shown in Figure 1. The circuit is provided with power source 10 comprising vehicle battery 12 supplying power through diode 14 and a storage capacitor 16 providing power through diode 18. Storage capacitor 16 is used in the event that vehicle battery 12 is disconnected during a deployment situation. During a sudden deceleration of the vehicle in which it is desirable to deploy the supplemental inflatable restraint system, electromechanical sensors 20 and 24 close, closing the current path between power source 10 and ground through squib 22, an ignitable initiator which causes inflation of the supplemental inflatable restraint.

In the systems of the type shown in Figure 1, when the sensors 20, 24 close during a sudden deceleration, such as would require deployment of the supplemental inflatable restraint, the current which passes through the sensors is limited only by the electrical resistance of squib 22 and the energy input from power source 10. The high current flow through sensors 20 and 24 causes arching of the contacts as the sensors' switches close. This arcing destroys the switches by damaging contact surfaces so that the switches cannot be re-used. If electrical-type switching devices are used, the high current initiated through the electrical switching devices can destroy those devices.

The present invention seeks to provide an improved controllable current source and method of supplying current in an inflatable restraint system.

According to an aspect of the present invention, there is provided a controllable current source for an inflatable restraint system as specified in claim 1.

According to another aspect of the present invention, there is provided a method of supplying current for deployment of an inflatable restraint.

It is possible to limit electrical current carried by components of a supplemental inflatable restraint system during deployment of the supplemental inflatable restraint, thereby decreasing the cost of implementation of a inflatable restraint system and increasing the reusability of system components. In some embodiments, it is possible to decrease the size of the energy reserve device used in the supplemental inflatable restraint system.

Preferably, a regulated current of 2 amperes is supplied during deployment of a supplemental inflatable restraint. Maximum current may be supplied into low impedance loads for a sustained time period after interruption of current from the vehicle power supply.

In a preferred embodiment, there is provided a sensing element, a switch device, a squib, a deploy control circuit and a current control circuit. The sensing element, switch device and squib are coupled in series between an energy source and ground. The deploy control circuit is coupled to the switch device and, in response to a deploy command, forward biases the switch device to allow current to flow through the squib, deploying the supplemental inflatable restraint. The current control circuit monitors current through the sense element and regulates the switch device, effectively limiting current through the series circuit to a predetermined value.

An embodiment of the present invention is described below, by way of example only, with reference to the accompanying drawings, in which:
Figure 1 is an illustration of a prior art supplemental inflatable restraint system;
Figure 2 is an illustration of an embodiment of supplemental inflatable restraint system;
Figure 3 illustrates an embodiment of circuit for the system of Figure 2; and
Figure 4 illustrates an embodiment of method of deploying the system of Figure 2.

Referring to Figure 2, the embodiment of current source 34 shown is implemented in a supplemental inflatable restraint system to provide improved control of deployment of the supplemental inflatable restraint through controlled ignition of squib 38. The series circuit shown requires both closing of the electromechanical switch of deceleration sensor 40 and activation of current source 34 through control line 36 coupled to a microprocessor or other form of controller.

The system shown allows for switch 40 to be closed first while high side driver 34 remains inactive. Then, after a very short but significant delay, high current source 34 may be activated by a control signal through line 36. Thus, the switch of sensor 40 can close without causing arcing of its contacts and, therefore, without destroying the switch.

Current source 34 is powered from the vehicle supply voltage +V_{d} through diode 27 or from energy reserve capacitor 30 through diode 28. Preferably, energy reserve capacitor 30 is maintained at a high voltage, such as 22 or 36 volts, by a step-up voltage source such as an inverter or switching circuit coupled to line 32.

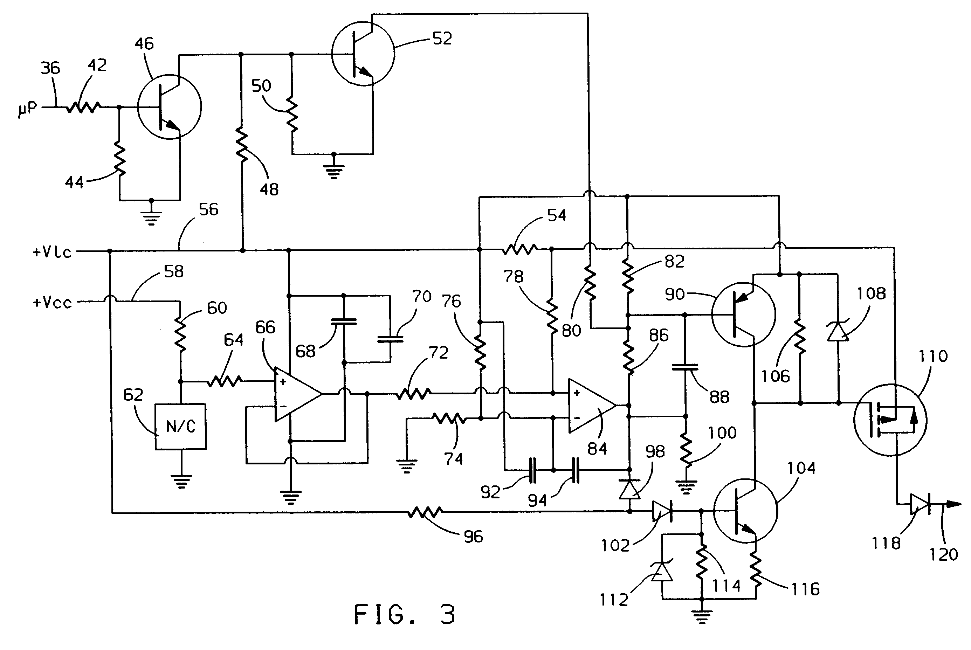

Referring to Figure 3, the current source 34, which is controlled through line 36, provides current through FET 110 and diode 118 to line 120, which is coupled to squib 38.

In general, when line 36 is low, FET 110 is off and no current flows through line 120. Conversely, when line 36 is set high, FET 110 toggles to a conductive state to provide current regulated to a predetermined value on line 120.

More particularly, line 58 receives regulated power from a regulated supply voltage source (5 volts) and line 56 is the current source of the squib 38, which current is provided via transistor 110. The supply current for line 56 is supplied from the vehicle battery while the battery is still connected, or from charge storage capacitor 30 maintained at a high voltage, such as 22 volts, if the battery becomes disconnected.

When line 36 is low, transistor 46 remains biased off through resistor 44. With transistor 46 off, line 56 pulls the base of transistor 52 high through resistor 48, thereby turning on transistor 52. When transistor 52 is on, it biases through resistor 80 the base of transistor 90 to a low potential, which switches on and biases the gate of FET 110 high, preventing FET 110 from conducting.

The 5 volts supplied on line 58 are coupled through resistor 60 to 1.235 volt precision reference 62, which provides the 1.235 volt reference voltage for the non-inverting input of differential amplifier 66 via resistor 64. Amplifier 66, with associated capacitors 68 and 70, acts as a buffer and provides, at its output, a low impedance reference voltage of 1.235 volts coupled to the non-inverting input of control amplifier 84 via resistor 72.

Control amplifier 84, with associated resistors 74, 76, 78 and 72 and capacitors 88, 92 and 94, is used to bias transistor 90, which drives and regulates FET 110 during a deployment condition. Transistor 104, whose base is biased by line 56 via resistor 96 and diode 102 acts as a current source for transistor 90.

When a control signal on line 36 is received to deploy the supplemental inflatable restraint, line 36 goes high biasing high the base of transistor 46, which becomes active and shunts the base of transistor 52. With transistor 52 off, it can no longer bias transistor 90 active. Therefore, transistor 90 can no longer maintain the FET 110 in the off state.

With transistor 52 now off, the output of control amplifier 84 maintains the base of transistor 90 high. Transistor 104 quickly activates FET 110 so that current may flow through diode 118 to line 120 and to squib 38, activating the supplemental inflatable restraint. While FET 110 is saturated, zener diode 108, having a breakdown voltage of 8.2 volts, limits the gain to source saturation voltage of FET 110. Resistor 106 feeds current to transistor 104, which flows to ground through resistor 116. Resistor 114 and zener diode 112, which has a break-down voltage of 3.6 volts, maintain the base of transistor 104 at 3.4 volts.

As current flows through transistor 110 to the deployment squib 38, a voltage drop develops across current sensing resistor 54. When two amperes of current flow through resistor 54, a voltage drop of 1 volt appears across resistor 54. The voltage drop of 1 volt triggers control amplifier 84, which pulls low the base of transistor 90, partially biasing off FET 110, maintaining a DC current through FET 110 at a level set by the control circuitry. In this manner, the current through FET 110 is limited to two amperes providing a regulated current to the deployment squib 38. As long as at least 10 volts are provided on line 56, the current source 34 can provide two amperes of regulated current through line 120 (with a total load of 5 ohms or less).

The above-described circuit provides a controllable current source for driving a supplemental inflatable restraint. If the reserve capacitor 30 is charged to 22 volts and has a capacitance of 2700 uF, the apparatus shown can provide 2 amperes of current for a minimum of 5 milliseconds after a 500 millisecond loss of battery, which is sufficient to deploy a supplemental inflatable restraint, which can eliminate arc destruction of the contacts of switch 40 when the switch is closed and over-stress of FET 110. This can allow the use of a smaller FET 110.

The reserve capacitor 30 can be charged to any voltage level, limited only by the maximum voltage rating of the components of the circuit. The regulated current can be set to any desired value.

Referring to Figure 4, the method by which the circuit of Figure 3 operates is shown. At step 130 a gating device such as FET 110 or other transistor is forward biased in response to a deployment command so as to supply current to a deployment initiator. At step 132, current flow through the gating device is sensed, such as with current sensing resistor 54. In response to the sensed current flow, step 134 partially biases off the gating device when the sensed current flow through the gating device exceeds a predetermined threshold to regulate the current supplied through the gating device.

The disclosures in United States patent application no. 963,182, from which this application claims priority, and in the abstract accompanying this application are incorporated herein by reference.

## Claims

1. A controllable current source for an inflatable restraint system comprising a sensing element (54); a switching device (110) coupled to the sensing element; a deployment control circuit (36-52,90) for closing the switching device in response to a deployment command so as to allow an electric current to flow through the sensing element and switching device for use in deployment of an inflatable restraint; and a current control circuit (84) responsive to the current flow through the sensing element to regulate the switching device so as to limit current through the switching device.

2. A controllable current source according to claim 1, comprising a squib (38) coupled to the switching device; the sensing element, switching device and squib being coupled in a series circuit between a power source and ground; the current control circuit being adapted to limit current through the series circuit.

3. A controllable current source according to claim 1 or 2, wherein the sensing element is a current sensing resistor and the switching device is a transistor.

4. A method of supplying current for deployment of an inflatable restraint, comprising the steps of forward biasing a switching device (110) in response to a deployment command to supply current through the switching device, which current activates a deployment initiator (38); sensing current flow through the switching device; and open circuiting the switching device when the sensed current flow exceeds a predetermined threshold, thereby to regulate the current through the switching device.
